# EUROPEAN PATENT APPLICATION

(11) **EP 3 326 910 A1**
(43) Date of publication of application: **30.05.2018**
(21) Application number: 16201209.0
(22) Date of filing: 29.11.2016
(51) Int. Cl.: B64C 21/06, B64D 27/02

(54) **AIRCRAFT HAVING A DRAG COMPENSATION DEVICE BASED ON A BOUNDARY LAYER INGESTING FAN**

(71) Applicant: Airbus Operations GmbH, 21129 Hamburg (DE)
(72) Inventor: Trahmer, Bernd, 21129 Hamburg (DE)
(74) Representative: LKGLOBAL Lorenz & Kopf PartG mbB Patentanwälte

(57) **Abstract**

An aircraft (2) is proposed, comprising a fuselage having a tapered rear shape, a landing gear for moving the aircraft (2) on a runway, a wing attached to the fuselage, at least a main engine for providing a main thrust and a rear fan (14), wherein the rear fan (14) is attached to a tail section of the fuselage, wherein the aircraft (2) is designed for conducting a take-off rotation around the landing gear during take-off from the runway, such that the tail section of the fuselage approaches the runway, wherein the rear fan (14) is an open fan having fan blades (36) extending in a radial direction to a longitudinal axis of the fuselage, wherein the fan blades (36) are dimensioned to equal at least a boundary layer thickness of the flow along the fuselage and to be smaller than the gap between the runway and the tail section of the fuselage during the take-off rotation.

## Description

### TECHNICAL FIELD

The invention relates to an aircraft having a drag compensation device based on a boundary layer ingesting fan.

### BACKGROUND OF THE INVENTION

An overall efficiency of an aircraft can be improved through a number of different measures. By increasing the efficiency of the propulsion, fuel consumption can be reduced and thus, the efficiency of the aircraft is improved. Further, the reduction of aerodynamic drag is beneficial for reducing the required power for propulsion. The reduction of drag may be accomplished through a variety of active and passive drag reduction means. Passive means may include a modified/optimized design of the flow surfaces of the aircraft in general and may include the introduction of devices, which positively influence the air flow. Active means may include devices for actively influencing a boundary layer of the aerodynamic flow particularly through removing air from the boundary layer in order to maintain laminar flow under conditions which would otherwise cause it to turn into turbulent flow.

A concept aircraft is known, which comprises a design common for commercial passenger transporting aircraft including a common cylindrical fuselage and a low wing. As an additional feature, a ducted fan is installed at a rear or tail section of the fuselage. This fan provides a certain propulsion force and, due to its nacelle surrounding the fan and providing an annular gap to the tail section of the fuselage, aims at the suction of a boundary layer of the aerodynamic flow formed on the fuselage. This allows to compensate the viscous drag of the fuselage.

### SUMMARY OF THE INVENTION

Providing a ducted fan at a tail section of a fuselage may lead to a reduction of tail clearance for take-off and landing of the aircraft. If it is desired to maintain tail clearance for take-off and landing, the tail section of the fuselage needs to be completely redesigned to avoid damaging the ducted fan. This increases the costs for designing, manufacturing and certifying the aircraft.

Hence, it is an object of the invention to propose an aircraft, which has an improved drag behavior and, at the same time, does not clearly increase the costs for redesigning and recertification of the aircraft.

This object is met by an aircraft having the features of claim 1. Advantageous embodiments and further improvements may be gathered from the sub-claims and the following description.

An aircraft is proposed comprising a fuselage having a tapered rear shape, a landing gear for moving the aircraft on a runway, a wing attached to the fuselage, at least a main engine for providing a main thrust and a rear fan. The rear fan is attached to the rear section of the fuselage. The aircraft is designed for conducting a take-off rotation around the landing gear during take-off from the runway, such that the tail section of the fuselage approaches the runway. The rear fan is an open fan having fan blades extending in a radial direction to a longitudinal axis of the fuselage. The fan blades are dimensioned to equal at least a boundary layer thickness of the flow along the fuselage during cruise flight conditions and the double boundary layer thickness at a maximum.

The general design of the aircraft may be similar or equal to a common aircraft of the same type, e.g. a commercial transportation aircraft. The mere difference lies in the integration of an open fan that sits on a rear section of the fuselage, i.e. at a rear end of the aircraft. Due to its position, it is inhaling the boundary layer of the fuselage that is retarded by friction between airflow and fuselage surface. Hence, the open fan is subjected to a boundary layer inflow and consequently is a boundary layer ingesting fan.

The design of the rear fan may be determined by two main factors. A first main factor is the boundary layer thickness. The fan blades should have a length, along which they are subjected to a boundary layer inflow, that is at least equal to the thickness of the boundary layer during cruise flight conditions, such that the fan blades are capable of ingesting the boundary layer in general. To guarantee the ingestion of the whole boundary layer, the fan blades should comprise a length that exceeds the boundary layer thickness. A second main factor is the available tail clearance of the fuselage during the take-off rotation. While the length of the fan blades should reliably cover an expected boundary layer thickness, they should not comprise a too excessive length. Resultantly, the fan blades should only slightly exceed the boundary layer thickness. Their length may be in a range of a single boundary layer thickness to a double boundary layer thickness during cruise flight.

In this regard, it is stated that these factors are particularly valid for a common design concept for commercial aircraft with a main landing gear underneath a wing box or a region directly adjacent thereto, wherein the wing box may be placed in a lower central region of the fuselage. In this case, a tail section of the fuselage comprises an upswept underside behind a kink or sweeping region. Commonly, during a take-off rotation, the fuselage rotates about the main landing gear, such that fuselage region slightly aft of the end of the cylindric section approaches the runway. The kink or sweeping region in this case may comprise the least distance to the runway, wherein the region far rearward of that lowest point may have an increasing distance in a rearward direction in comparison to the kink or upsweep region.

Hence, a common commercial aircraft having a commonly designed longitudinal, cylindrical fuselage having an upswept underside allows the integration of a small-size rear fan that comprises fan blades that have a dimension at least equal to the boundary layer thickness. The rear fan allows a boundary layer ingestion to at least partially compensate the viscous drag of the fuselage. At the same time, modification of a tail section of the fuselage is to be avoided. The open fan allows to be placed at a rear end of the fuselage and does not hinder the take-off rotation due to its relatively low radial extension.

It is further indicated that the boundary layer thickness is considered as the distance of a flow layer, which has a velocity equal to 99% of the free stream velocity, from the flow surface. A boundary layer thickness is immanent to the dimensioning and size of the fuselage. A common estimation for a boundary layer thickness of an aircraft fuselage in cruise flight condition is equal to 1 centimeter per meter fuselage length. As an example, a commercial aircraft having a fuselage length of approximately 40 m comprises a boundary layer thickness of approximately 40 cm, such that the blade length of the open rear fan should at least be equal to 40 cm in this case. Further, for large aircraft with a fuselage length in the region of approximately 80 m, the blade length may be equal to at least 80 cm. Recompression of the air flow over the tapered rear shape, which includes the tail section, will increase this thickness. This estimation makes clear that only a rather little installation space is required for providing a boundary layer ingesting open rear fan, which is very likely available in commonly designed commercial aircraft. Hence, drastical fuselage modifications are not required.

Of course, this concept of the open rear fan it is subjected to a boundary layer flow is also applicable to other aircraft designs. The above clarifying example should not be construed as limiting the scope of protection or the invention in any way.

The boundary layer has a certain velocity profile between the flow surface and the free stream that surrounds the aircraft. At a point directly on the surface, the velocity of the flow layer may be considered zero, while the velocity of the flow layers with greater distances from the flow surface increases. The velocity profile depends on several factors, which also include the viscosity of the air. In order to adapt the rear fan to such a boundary layer flow it comprises a certain evolution of its local pitch angle along the blade length, which is adapted to the velocity profile of the boundary layer flow.

In an advantageous embodiment, the fan blades comprise a plurality of local incidence angles, which decrease from a radial inward section of the fan blades in a radial outward direction, i.e. from a hub to a tip. A desired local angle of attack of the fan blade airfoil is achieved by adaption of the local twist and incidence of the blade airfoil to the boundary layer velocity profile. A radially inward position of the fan blade may comprise a lower blade incidence angle in order to enable a proper blade angle of attack within the relatively slow air flow due to the very low boundary layer velocities in the vicinity of the fuselage surface and the rather low traveling speed of the propeller due to a minimum radius at this position. Depending on the expected boundary layer velocity profile as well as the dimensions of the propeller the local incidence angles decrease in a radially outward direction. The development of the local blade incidence angles is balanced to reflect the higher translational velocity of the respective radial section of the fan compared to further inward sections and the higher velocity of the air flow with an increasing distance to the flow body. It may be feasible to maintain substantially similar local angles of attack of the boundary layer inflow along the blade length or to maintain these in a relatively narrow angle range depending on the design of the fan. By providing a suitable development of the local incidence angles, the boundary layer ingestion may thus comprise a maximum efficiency.

For conducting a desired rotation, the rear fan is connected to a drive unit, which is adapted to rotate the rear fan at least with a first rotational speed. The drive unit may be realized through a variety of different types of devices, which may include, but are not limited to, electric motors, fuel combusting drives or torque transfer devices that are coupled with other rotating devices, such as main engines, as well as combinations thereof. The torque transfer devices may include an arrangement of shafts and links. As an alternative, hydraulic or pneumatic components may be used for transferring mechanical power from the at least one main engine to the rear fan.

The first rotational speed may be dimensioned to provide a thrust at the rear fan, which compensates the viscous drag of the fuselage at a maximum. This provides a maximum benefit for the efficiency of the aircraft from boundary layer ingestion effects, as the boundary layer ingesting rear fan focuses on providing a drag reduction that is caused by the boundary layer, but does not provide a significant additional thrust for the aircraft, since this would require much larger fan blades and a higher energy transfer to the tail section of the aircraft.

In a preferred embodiment, the first rotational speed is chosen for a first cruise velocity at a first cruise altitude. The viscous drag created by the fuselage during a cruise phase may thereby be compensated. The cruise flight with the first cruise velocity at the first cruise altitude may cover a majority of a flight mission.

The drive unit may additionally be adapted to rotate the rear fan at least a second rotational speed for at least a second flight state. Such a second flight state may include a cruise flight at a different velocity and/or a different cruise altitude, but may also include climb or descent phases of the aircraft. Hence, more or less further flight states may be considered when designing the drive unit.

Providing different rotational speeds at the rear fan is rather simple when using an electric motor, which is connected to an electrical system of the aircraft. The rotational speed may depend on a suitable power electronics. However, in case the drive unit is a mechanical transfer means, it may be required to provide a certain gear that leads to providing at least two different rotational speeds at an output end to drive the rear fan.

A first control unit may be coupled with the drive unit, wherein the first control unit is adapted for influencing the rotational speed of the drive unit at an output, which is coupled with the rear fan. The first control unit may further be adapted to control the rotational speed depending on a flight state of the aircraft. The flight state may particularly include information about the flight velocity and the flight altitude. Hence, an optimum rotational speed may be assumed for the rear fan depending on the actual flight state. The information may be fed into the first control unit manually, e.g. by an operator of the aircraft, or automatically, e.g. through a flight management system or a flight control system.

The rear fan of the aircraft may further comprise variable pitch fan blades, which are rotatable around a longitudinal blade axis so as to adjust the general pitch of the respective fan blade. Providing variable pitch fan blades leads to the ability of generating a thrust that is dimensioned in accordance with the present flight state or a desired action, while maintaining a certain rotational speed or while not influencing the drive unit. Resultantly, the rear fan is adapted to the present operating condition. For example, the general pitch of the fan blades may be adjusted to reflect a certain cruise altitude, while the rear fan rotates with an unchanged constant speed. This exemplarily allows to use a mechanical transfer device between main engines and the rear fan.

The aircraft may further comprise a second control unit, which is coupled with an actuator for adjusting the pitch angle of the variable pitch fan blades, wherein the second control unit is adapted for adjusting the pitch angle according to the flight state of the aircraft. Again, the flight state may particularly include information about the flight velocity and the flight altitude. Hence, an optimum blade pitch angle may be reached for the rear fan depending on the actual flight state. The information may, as stated regarding the first control unit, be fed into the first control unit manually, e.g. by an operator of the aircraft, or automatically, e.g. through a flight management system or a flight control system.

In another advantageous embodiment, the rear fan is adapted to create negative thrust by providing a negative fan blade pitch. Using negative thrust allows to control steeper descent angles in approach for landing. Also, negative thrust may be helpful for an operation on ground such as braking or even moving rearward from the parking position.

The fan blade pitch angle may be chosen such that the rear fan produces a thrust force, which compensates the viscous drag of the fuselage at a maximum. Hence, a limited power transfer and limited generation of thrust force is accomplished and an optimum beneficial effect regarding the boundary layer ingestion is reached.

The invention also relates to the use of an open rear fan attached to a tail section of a fuselage of an aircraft for compensating the viscous drag of the fuselage at least during cruise flight conditions, wherein the aircraft has a tapered rear shape, a landing gear attached to an underside of the fuselage for moving the aircraft on a runway, a wing attached to the fuselage, at least a main engine for providing a main thrust and a rear fan, wherein the aircraft is designed for conducting a take-off rotation around the landing gear during take-off from the runway, such that the tail section of the fuselage approaches the runway, and wherein the rear fan comprises fan blades extending in a radial direction to a longitudinal axis of the fuselage, wherein the fan blades are dimensioned to equal at least a boundary layer thickness of the flow along the fuselage and to be smaller than the gap between the runway and the tail section of the fuselage during the take-off rotation.

### BRIEF DESCRIPTION OF THE FIGURES

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1 shows an exemplary embodiment of the aircraft in a lateral view.
Figs. 2 and 3 show basic illustrations of rear fans in lateral views.
Figs. 4a and 4b show examples of general principles of coupling a rear fan to a source of energy in schematic views.

### DETAILED DESCRIPTION OF THE DRAWINGS

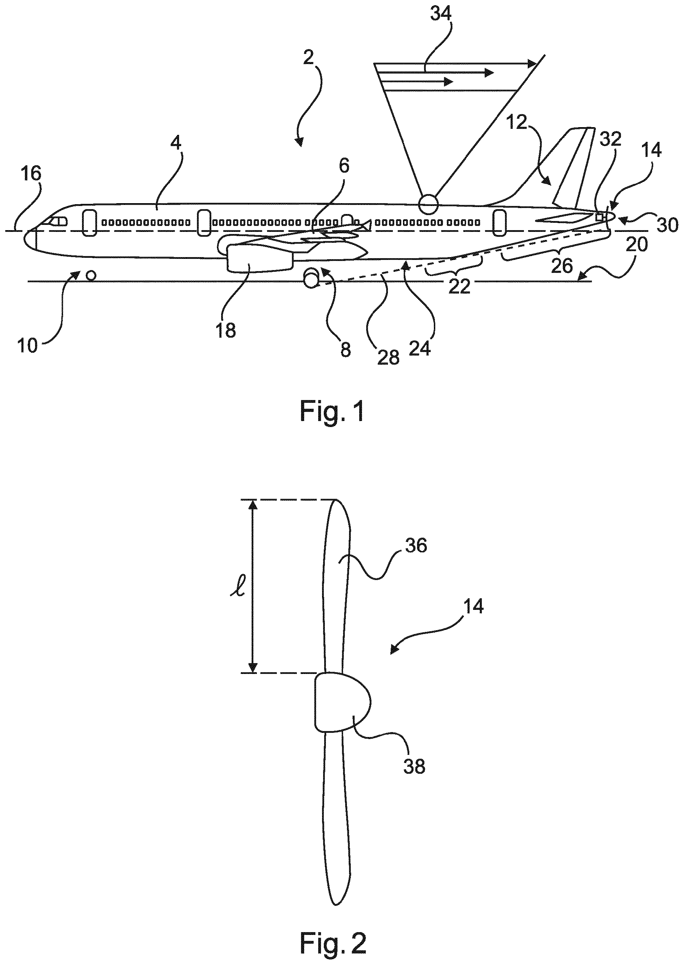

Fig. 1 shows an aircraft 2 having a fuselage 4, a wing 6, a main landing gear 8, a nose landing gear 10, a tail section 12 and a rear fan 14. The fuselage 4 may consist of one or more central portions having constant cross sections as well as a tapered section at a nose and a tail. The fuselage 4 may be designed as a cylindrical (tubular) fuselage with a main or longitudinal extension axis 16.

The term "cylindrical" does not necessarily require a circular cross-section, but merely expresses an elongate shape along the longitudinal axis 16 with a cross section that remains unchanged along a major section of the fuselage 4. Commercial aircraft are known having a circular cross-section, while others may tend to be more oval, i.e. having a slightly unequal relationship between height and width of the fuselage. Other commercial aircraft are known having a clearly oval cross-section at least in a certain region. These are not ruled out by the term "cylindrical".

The wing 6 is arranged on a substantially central section of the fuselage 4 and carries exemplarily two main engines 18. Exemplarily underneath the wing 6, the main landing gear 8 is arranged, which is designed for absorbing a landing shock of the aircraft 2 through a dedicated shock absorber (not shown). The landing gear 8 may also be arranged at other installation position close to a center of gravity of the aircraft at the wing 6, the fuselage 4 or devices therebetween.

During take-off and landing, the aircraft 2 conducts a rotation around the main landing gear 8, before lifting off or after touchdown. During such a rotation, the tail section 12 approaches the runway 20. The latter is conducted in order to increase the aerodynamic lift during take-off and landing, such that the aircraft attitude is rotated to point nose-up. In this condition the rear fuselage is closest to the runway but not touching it.

The tail section 12 comprises a sweeping region 22, at which an underside 24 of the fuselage 4 makes a transition between a horizontal orientation (in front of the sweeping region 22) and an almost angular upward oriented region 26 (behind the sweeping region 22). During a take-off rotation, the sweeping region 22 assumes a minimum distance to the runway 20, wherein the distance of the angular oriented region 26 exemplarily increases in a rearward direction. This is indicated by a dashed contact line 28, which resembles a rotated fuselage 4 on contact with the runway 20. It is apparent that a rear end 30 of the tail section 12 may comprise a certain free space, into which the rear fan 14 is integratable.

The rear fan 14 may be connected to a drive unit 32, which is in this example placed forward of the rear fan 14. The drive unit 32 is exemplarily realized as an electric motor (not shown), which is connected to at least one electrical system of the aircraft 2.

The fuselage 4 depicted in Fig. 1 may comprise a length of approximately 40 m, which leads to an estimated thickness of a boundary layer 34 of approximately 40 cm over a constant fuselage cross-section during cruise flight conditions and more over a tapered rear end. However, this may be a rather rough estimation and is not to be considered an accurate measure.

Fig. 2 shows a very basic illustration of the rear fan 14 in a lateral view. The rear fan 14 in general is designed for ingesting the boundary layer 34 that passes the tail section 12 at the rear end 30. Hence, blades 36 of the rear fan 14 comprise a length l that is at least equal to the thickness of the boundary layer 34. In this case, the length l of the fan blades 36 may exemplarily be 40 cm or more. For the sake of providing a certain safety factor, the length l of the fan blades 36 may be double the size of the thickness of the boundary layer 34.

Depending on the size of the rear fan 14, including the number of fan blades 36 and the design of the rear end 30 of the aircraft 2 the rear fan 14 may comprise an end cap 38 arranged on or being an integral part of a hub for holding the fan blades 36.

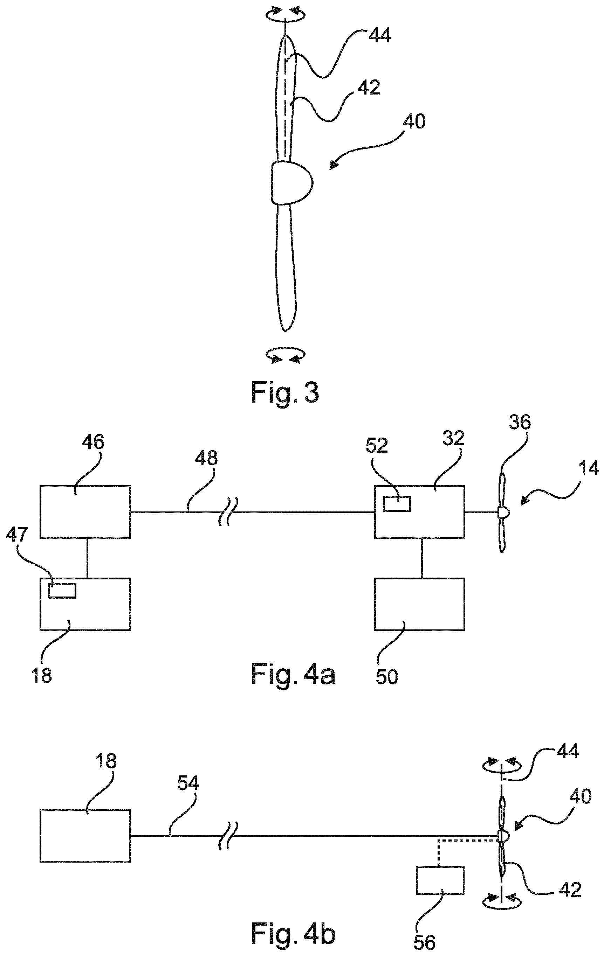

Fig. 3 shows another example of a rear fan 40, which comprises a variable pitch. For this purpose, fan blades 42 are supported so as to be rotatable around their longitudinal axes 44. To maintain a smooth operation, the individual pitch angles of all fan blades 44 are coupled. The rotation of the fan blades 42 is conducted through an actuator, which is not shown in this Figure. The actuator may be integrated into the hub of the rear fan 40 or may be arranged in the fuselage 4 coupled with the fan blades 42 through a linkage (not shown).

Fig. 4a shows a first example of a general principle of coupling a rear fan 14 with a source of energy in the aircraft 2. In this example, the rear fan 14 has constant pitch fan blades 36. The rear fan 14 is mechanically connected to the drive unit 32, which in turn is coupled with an electrical network 46 illustrated as a box for simplification. The electrical network 46 is fed with electrical energy through generators 47 integrated into the main engines 18. Of course, the generators 47 are merely an example and further sources of electrical power are conceivable, such as fuel cells, batteries and other elements. The drive unit 32 is connected to the electrical network 46 through an electrical line 48, which extends to the rear end 30 of the fuselage 4.

The drive unit 32 may comprise a power electronics unit 52, which processes the voltage and the current supplied by the electrical network 46 into a required form suitable for operating the drive unit 32. The power electronics unit 52 may be controlled through a first control unit 50 in order to adjust the drive unit 32 to a desired rotational speed. The first control unit 50 may be coupled with an integrated flight control unit of the aircraft 2, a flight management system or a user input device accessible by an aircraft operator in the cockpit of the aircraft 2. Hence, the rear fan 14 may be set into operation once a certain flight state is reached with a certain rotational speed to compensate the viscous drag of the fuselage 4. During the operation of the rear fan 14 the rotational speed may be adjusted to the actual flight state, i.e. it may be increased or decreased inter alia depending on the flight velocity and altitude.

Fig. 4b shows a second example of a general principle of coupling a rear fan 40 with a source of energy in the aircraft 2. Here, a rear fan 40 with a variable pitch is used.

The primary source of energy in this case is a main engine 18, which is coupled with the rear fan 40 through a torque transfer means 54. This may be a set of shafts and links, which extend from the respective main engine 18 to the rear fan 40. A second control unit 56 may be connected to an actuator (not shown) of the rear fan 40 in order to adapt the pitch angle of the fan blades 42 according to the actual flight state of the aircraft 2 and under consideration of a substantially constant rotational speed of the rear fan 40.

The second control unit 56 may be adapted to influence the pitch angle of the fan blades 42 such that after landing a reverse thrust may be created to support the brakes of the aircraft 2.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. Aircraft (2), comprising a fuselage (4) having a tapered rear shape, a wing (6) attached to the fuselage (4), a main landing gear (8) for moving the aircraft (2) on a runway (20), at least one main engine (18) for providing a main thrust and a rear fan (14, 40),
wherein the rear fan (14, 40) is attached to a tail section (12) of the fuselage (4),
wherein the aircraft (2) is designed for conducting a take-off rotation around the main landing gear (8) during take-off from the runway (20), such that the tail section (12) of the fuselage (4) approaches the runway (20),
wherein the rear fan (14, 40) is an open fan having fan blades (36, 42) extending in a radial direction to a longitudinal axis (16) of the fuselage (4), wherein the fan blades (36, 42) are dimensioned to equal at least the thickness of a boundary layer (34) of the flow along the fuselage (4) and to be smaller than a gap between the runway (20) and the tail section (12) of the fuselage (4) during the take-off rotation.

2. Aircraft (2) of claim 1,
wherein the fan blades (36, 42) comprise a plurality of local blade incidence angles, which evolve from a radial inward section of the fan blades (36, 42) in a radial outward direction to adapt to the velocity profile of the boundary layer (34) of the fuselage (4).

3. Aircraft (2) of claim 2,
wherein the local blade incidence angles at an outer diameter of the rear fan (14, 40) are lower than at an inner diameter of the rear fan (14, 40).

4. Aircraft (2) of any of the preceding claims,
wherein the rear fan (14, 40) is connected to a drive unit (32), which is adapted to rotate the rear fan (14, 40) at least with a first rotational speed.

5. Aircraft (2) of claim 4,
wherein the first rotational speed is chosen such that the rear fan (14, 40) produces a thrust force, which compensates the viscous drag of the fuselage (4) at a maximum.

6. Aircraft (2) of claim 4 or 5,
wherein the first rotational speed is chosen for a first cruise velocity at a first cruise altitude.

7. Aircraft (2) of any of claims 4 to 6,
wherein the drive unit (32) is additionally adapted to rotate the rear fan (14, 40) at least a second rotational speed for at least a second flight state.

8. Aircraft (2) of any of the preceding claims,
further comprising a first control unit (50) coupled with the drive unit (32),
wherein the first control unit (50) is adapted for influencing the rotational speed of the drive unit (32) at an output, which is coupled with the rear fan (14, 40).

9. Aircraft (2) of any of the preceding claims,
wherein the drive unit (32) is a torque transfer means (54) between the at least one main engine (18) and the rear fan (14, 40).

10. Aircraft (2) of any of the preceding claims,
wherein the rear fan (14, 40) comprises variable pitch fan blades (42), which are rotatable around a longitudinal blade axis so as to adjust the general pitch of the respective fan blade (42).

11. Aircraft (2) of claim 10,
further comprising a second control unit (56), which is coupled with an actuator for adjusting the pitch angle of the variable pitch fan blades (42),
wherein the second control unit (56) is adapted for adjusting the pitch angle according to the flight state of the aircraft (2).

12. Aircraft (2) of claim 10 or 11,
wherein the rear fan (14, 40) is adapted to create negative thrust by providing a negative fan blade pitch angle

13. Aircraft (2) of any of claims 10 to 12,
wherein the fan blade pitch angle is chosen such that the rear fan (14, 40) produces a thrust force, which compensates the viscous drag of the fuselage (4) at a maximum.

14. Use of an open rear fan (14, 40) attached to a tail section (12) of a fuselage (4) of an aircraft (2) for compensating the viscous drag of the fuselage (4) at least during cruise flight conditions, wherein the aircraft (2) has a tapered rear shape, a main landing gear (8) for moving the aircraft (2) on a runway, a wing attached to the fuselage (4), at least a main engine for providing a main thrust and a rear fan (14, 40), wherein the aircraft (2) is designed for conducting a take-off rotation around the landing gear during take-off from the runway, such that the tail section (12) of the fuselage (4) approaches the runway, and wherein the rear fan (14, 40) comprises fan blades (36, 42) extending in a radial direction to a longitudinal axis of the fuselage (4), wherein the fan blades (36, 42) are dimensioned to equal at least a boundary layer thickness of the flow along the fuselage (4) and to be smaller than the gap between the runway and the tail section (12) of the fuselage (4) during the take-off rotation.
